# EUROPEAN PATENT APPLICATION

(11) **EP 4 841 819 A1**
(43) Date of publication of application: **18.11.2026**
(21) Application number: 25739098.9
(22) Date of filing: 09.01.2025
(51) Int. Cl.: H01M 50/618, H01M 10/04

(54) **ELECTROLYTE INJECTION AND IMPREGNATION DEVICE AND METHOD THEREFOR**

(30) Priority: 12.01.2024 KR 20240005502
(71) Applicant: LG Energy Solution, Ltd., Seoul 07335 (KR)
(72) Inventor: KIM, Kihyeon, Daejeon 34122 (KR); KIM, Taemin, Daejeon 34122 (KR); HA, Jaesung, Daejeon 34122 (KR)
(74) Representative: Goddar, Heinz J.
(86) International application number: PCT/KR2025/000523
(87) International publication number: WO 2025/150933

(57) **Abstract**

The present invention provides an electrolyte injection and impregnation device. comprising: a mount 100 where a plurality of battery cells 50 are mounted; a plurality of hoppers 200 connected to the plurality of battery cells 50 mounted on the mount 100, respectively; a depressurization source P1 and a pressurization source P2 connected to the plurality of hoppers 200. Through the plurality of hoppers 200, an electrolyte is injected into the plurality of battery cells 50, and interiors of the plurality of battery cells 50 are depressurized to a pressure lower than atmospheric pressure and pressurized to a pressure higher than atmospheric pressure.

## Description

### [TECHNICAL FIELD]

This application claims the benefit of priority based on Korean Patent Application No. 10-2024-0005502 filed on January 12, 2024, entire content disclosed in the document of the patent applications is comprised as a part of this specification.

The present invention relates to an electrolyte injection and impregnation device and an electrolyte injecting and impregnation method wherein an electrolyte injecting device and an impregnating device are integrated into a single device, the maintenance cost of a secondary battery manufacturing device is reduced, the manufacturing cost of a secondary battery is reduced, the manufacturing time is shortened, abnormal operation or defects may be quickly and easily confirmed by visual inspection, and the amount of leaked electrolyte is reduced.

### [BACKGROUND ART]

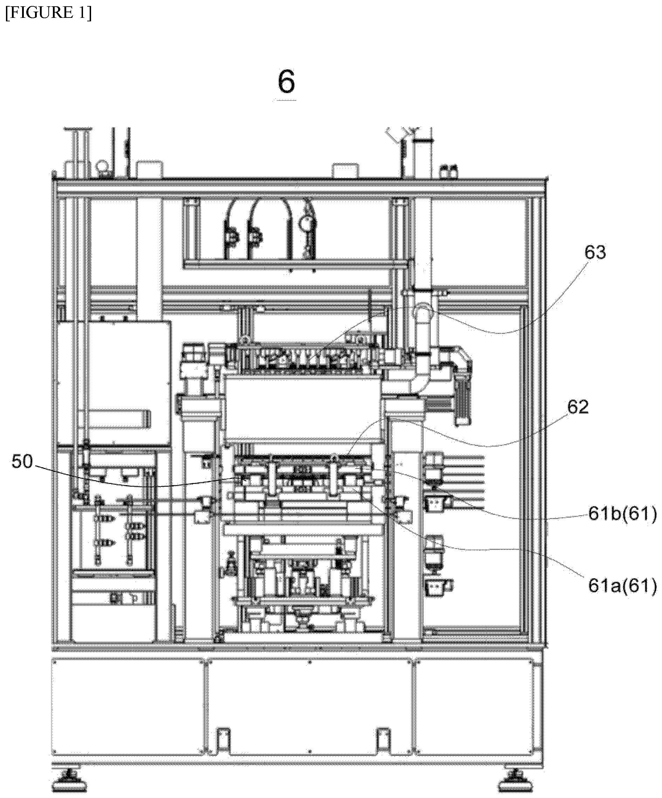

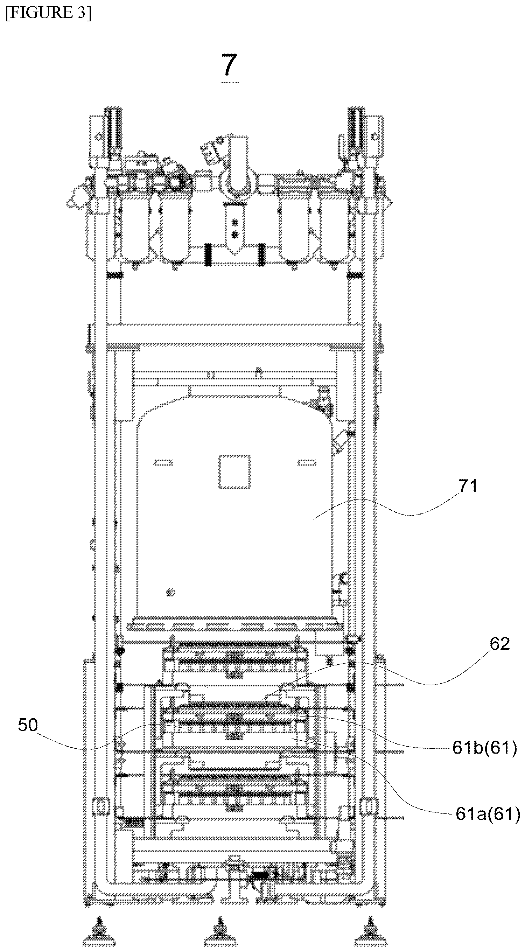

Generally, the injection of electrolyte in a secondary battery is performed in the order of vacuum, injection, and ventilation in an injection chamber and an electrolyte injecting device (6 of FIG. 1). In addition, the electrolyte impregnation process of the battery is performed by alternately repeating vacuum and pressurization in an impregnation chamber (71 of FIG. 3).

In order to manufacture a battery as described above, since both an electrolyte injecting device and an impregnating device are required, the maintenance cost of the secondary battery manufacturing device and the manufacturing cost of the secondary battery increase, the time required for manufacturing the secondary battery increases, the equipment space increases, the chamber is large such that it is difficult to identify the cause of the device's defects, and maintenance is difficult. In addition, since the inside of the plurality of battery cells 50 in the impregnation chamber must be impregnated with electrolyte by repeatedly increasing and decreasing the internal pressure of the impregnation chamber, the amount of high-purity gas (e.g., inert gas, nitrogen) used during pressurization increases such that the manufacturing cost of the secondary battery increases. In addition, since the electrolyte impregnation is performed with the plurality of battery cells 50 accommodated in the chamber, the abnormal impregnation or a defect of the electrolyte impregnating device cannot be quickly and easily confirmed with visual inspection.

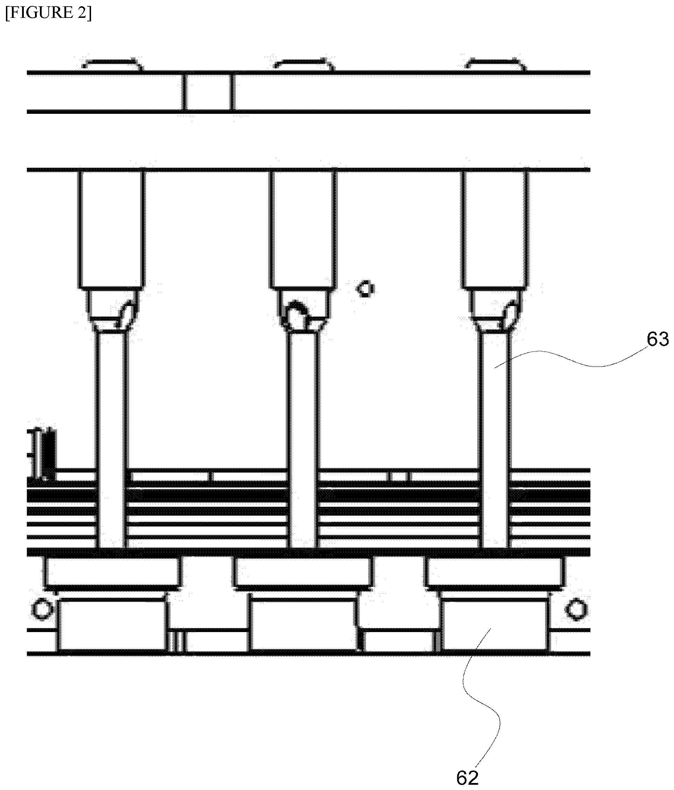

In addition, conventionally, a hopper 62 of an upper carrier 61a that connects the battery cell 50 and the injector 63 of the electrolyte injecting device 6 is interposed therebetween (FIGS. 1 and 2). Accordingly, conventionally, there was a large amount of electrolyte leakage due to the lack of sealing between the hopper 62 of the upper carrier 61a and the injector 63 of the electrolyte injecting device (FIGS. 1 to 3). Here, the carrier 61 may be a case or a pallet used to facilitate transport and fixing of the plurality of battery cells 50. Therefore, frequent cleaning of the electrolyte reduces the production of secondary batteries, and secondary problems (such as weakening of the sealing force between the battery cell 50 and the hopper 61) occur due to electrolyte leakage.

Therefore, a method that may solve the above-described problems at once is required. A pertinent prior art is Korean Patent No. 10-2399085.

### [DISCLOSURE]

### [TECHNICAL PROBLEM]

In order to solve above-described problems, it is an object of the present invention to provide an electrolyte injection and impregnation device and an electrolyte injecting and impregnation method that integrate a conventional electrolyte injecting device and an impregnating device into a single device, thereby reducing the maintenance cost of a secondary battery manufacturing device.

It is an object of the present invention to provide an electrolyte injection and impregnation device and an electrolyte injecting and impregnation method that reduce the manufacturing cost of a secondary battery and shorten the manufacturing time.

It is an object of the present invention to provide an electrolyte injection and impregnation device and an electrolyte injecting and impregnation method that allows quick and easy confirmation abnormal operation or defects with visual inspection.

It is an object of the present invention to provide an electrolyte injection and impregnation device and an electrolyte injecting and impregnation method that reduce the portion (connection portion) where electrolyte leaks and reduce the amount of leaked electrolyte.

It is an object of the present invention to provide an electrolyte injection and impregnation device and an electrolyte injecting and impregnation method wherein a hopper capable of electrolyte injection and pressure increase and decrease is easily implement at low cost with a simple configuration.

It is an object of the present invention to provide an electrolyte injection and impregnation device and an electrolyte injecting and impregnation method that improve the uniformity of increase and decrease in internal pressures of a plurality of hoppers and a battery cell and prevent damage.

It is an object of the present invention to provide an electrolyte injection and impregnation device and an electrolyte injecting and impregnation method capable of preventing damage of a battery cell and stably performing an impregnation process.

It is an object of the present invention to provide an electrolyte injection and impregnation device and an electrolyte injecting and impregnation method that facilitates alignment fixing of a battery cell mount and allows a battery cell to be closely attached to a hopper.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides an electrolyte injection and impregnation device, including: a mount 100; a plurality of hoppers 200; a depressurization source P1 and a pressurization source P2; a reception space 400; and a plurality of manifolds 500.

A plurality of battery cells 50 may be mounted on the mount 100.

The plurality of hoppers 200 may be connected to the plurality of battery cells 50 mounted on the mount 100, respectively.

An electrolyte supply 300 may be connected to the plurality of hoppers 200.

The depressurization source P1 and the pressurization source P2 may be connected to the plurality of hoppers 200.

The reception space 400 may be connected to the depressurization source P1 and the pressurization source P2.

An electrolyte may be injected into the plurality of battery cells 50 through the plurality of hoppers 200.

Interiors of the plurality of battery cells 50 may be depressurized to a pressure lower than atmospheric pressure through the plurality of hoppers 200.

Interiors of the plurality of battery cells 50 may be pressurized to a pressure higher than atmospheric pressure through the plurality of hoppers 200.

Each of the plurality of hoppers 200 may include: an injector 210; and a pressurize and depressurize unit 220.

The injector 210 may be configured to introduce the electrolyte introduced from outside into each of the plurality of battery cells 50.

The injector 210 may be openable and closeable.

The pressurize and depressurize unit 220 may be connected to the depressurization source P1 and the pressurization source P2.

The pressurize and depressurize unit 220 may be configured to pressurize or depressurize the interior of each of the plurality of battery cells 50.

Each of the plurality of manifolds 500 may connect the reception space 400 to the pressurize and depressurize units 220 of a plurality of different hoppers 200.

In one embodiment, each of the plurality of hoppers 200 may be in direct contact with each of the plurality of battery cells 50.

In one embodiment, the pressurize and depressurize unit 220 may be disposed between a front end portion of the injector 210 and each of the plurality of battery cells 50.

The electrolyte discharged from the injector 210 may flow into each of the plurality of battery cells 50 through the pressurize and depressurize unit 220.

In one embodiment, the injector 210 may include: an electrolyte storage 212; and an injection needle 214.

The electrolyte introduced from outside may be stored in the electrolyte storage 212.

The injection needle 214 may open and close the injector 210 by opening and closing the electrolyte storage 212.

In one embodiment, the electrolyte stored in the electrolyte storage 212 may flow into the interior of each of the plurality of battery cells 50 when the injection needle 214 opens the electrolyte storage 212.

The injection needle 214 may close the electrolyte storage 212 when the pressurize and depressurize unit 220 pressurizes the interior of each of the plurality of battery cells 50.

In one embodiment, each of the plurality of manifolds 500 may include: a common pipe 510; and a plurality of branch pipes 520.

The common pipe 510 may be connected to the reception space 400.

The plurality of branch pipes 520 may connect the common pipe 510 and the pressurize and depressurize units 220 of the plurality of different hoppers 200.

In one embodiment, each of the branch pipes 520 may have one end portion connected to the common pipe 510 disposed above other end portion thereof connected to the pressurize and depressurize unit 220 of each of the plurality of hoppers 200.

In one embodiment, a first angle L between a horizontal plane and a straight line connecting the one end portion and the other end portion of each of the branch pipes 520 may be 30 degrees or more and 60 degrees or less.

In one embodiment, each of the plurality of hoppers 200 may be connected to an upper end portion of each of the plurality of battery cells 50 mounted on the mount 100.

The mount 100 may include a plurality of cell support bodies 110.

The plurality of battery cells 50 may be mounted on the plurality of cell support bodies 110, respectively.

The plurality of cell support bodies 110 may surround the plurality of battery cells 50, respectively.

Each of the plurality of cell support bodies 110 may surround each of the plurality of battery cells 50 mounted on each of the plurality of cell support bodies 110 from a lower portion to an upper portion thereof.

In one embodiment, each of the plurality of cell support bodies 110 may include at least one first groove 112.

The at least one first groove 112 may be recessed downward from an upper end of each of the plurality of cell support bodies 110.

The at least one first groove 112 may penetrate through inside and outside of each of the plurality of cell support bodies 110.

In one embodiment, each of the plurality of hoppers 200 may be disposed above each of the plurality of battery cells 50 mounted on the mount 100.

Each of the plurality of hoppers 200 may be vertically connected to each of the plurality of battery cells 50.

The electrolyte injection and impregnation device 10 may further include a base portion 600.

The base portion 600 may be disposed below the plurality of hoppers 200.

The base portion 600 may be vertically movable relative to the plurality of hoppers 200.

The base portion 600 may include: a base 610; and a plurality of alignment members 620.

The base 610 may be plate-shaped.

The plurality of alignment members 620 may be installed at the base 610.

The plurality of alignment members 620 may be formed to protrude upward than the base 610.

Each of the plurality of alignment members 620 may include: an alignment guide 622; and an alignment fixer 624.

The alignment guide 622 may have a cross-sectional area gradually increasing from an upper end toward downward direction.

The alignment fixer 624 may extend downward from a lower end of the alignment guide 622.

The alignment fixer 624 may have a constant cross-sectional area vertically.

The mount 100 may include a plurality of alignment holes 120.

The plurality of alignment holes 120 may be formed to penetrate vertically therethrough.

The plurality of alignment members 620 may be inserted through or pass through the plurality of alignment holes 120, respectively.

At least a portion of each of the plurality of alignment holes 120 may have a cross-sectional shape and size corresponding to those of each of the alignment fixers 624.

At least a portion of each of the plurality of alignment holes 120 may have an inner surface in contact with each of the alignment fixers 624.

In one embodiment, the base portion 600 may further include a plurality of elastic members 630.

The plurality of elastic members 630 may be coupled to the plurality of alignment members 620, respectively.

Each of the plurality of elastic members 630 may be elastically deformed by the mount 100.

Each of the plurality of elastic members 630 may apply pressure to the mount 100 in upward direction.

In order to solve above-described problems, the present invention provides an electrolyte injecting and impregnation method S700 including a mounting process S710; a connecting process S720; an injection process S740; and an impregnation process S750.

In the mounting process S710, the plurality of battery cells 50 may be mounted on the mount 100.

In the connecting process S720, the plurality of battery cells 50 may be connected to the plurality of hoppers 200, respectively.

In the injection process S740, an electrolyte may be injected into the plurality of battery cells 50 through the plurality of hoppers 200.

In the impregnation process S750, interiors of the plurality of battery cells 50 may be depressurized and pressurized through the plurality of hoppers 200.

In one embodiment, the electrolyte injecting and impregnation method S700 may further include: a depressurizing process S730.

In the depressurizing process S730, the interiors of the plurality of battery cells 50 may be depressurized through the plurality of hoppers 200.

The injection process S740 may be performed after the depressurizing process S730.

### [ADVANTAGEOUS EFFECTS]

According to embodiments of the present invention, an electrolyte injection and impregnation device 10 may include: a mount 100 where a plurality of battery cells 50 may be mounted; a plurality of hoppers 200 connected to the plurality of battery cells 50 mounted on the mount 100, respectively; an electrolyte supply 300 connected to the plurality of hoppers 200; a depressurization source P1 and a pressurization source P2 connected to the plurality of hoppers 200; a reception space 400 connected to the depressurization source P1 and the pressurization source P2; and a plurality of manifolds 500. Through the plurality of hoppers 200, an electrolyte may be injected into the plurality of battery cells 50, and interiors of the plurality of battery cells 50 may be depressurized to a pressure lower than atmospheric pressure and pressurized to a pressure higher than atmospheric pressure. Each of the plurality of hoppers 200 may include: an openable and closable injector 210 configured to introduce the electrolyte introduce from outside into the plurality of battery cells 50; and a pressurize and depressurize unit 220 connected to the depressurization source P1 and the pressurization source P2 and configured to pressurize or depressurize the interior of each of the plurality of battery cells 50. Each of the plurality of manifolds 500 may connect the reception space 400 to the pressurize and depressurize units 220 of a plurality of different hoppers 200.

Accordingly, the electrolyte may be injected and the plurality of battery cells 50 may be impregnated by connecting the plurality of hoppers 200 of the electrolyte injection and impregnation device 10 to the plurality of battery cells 50 only once, respectively. As a result, the manufacturing cost of the secondary battery may be reduced and the manufacturing time may be shortened. In addition, since the conventional electrolyte injecting device and impregnating device are integrated into a single device, the maintenance cost of the secondary battery manufacturing device may be reduced.

In addition, unlike the conventional method wherein the inside of the plurality of battery cells 50 in the impregnation chamber is impregnated with electrolyte by repeatedly increasing and decreasing the internal pressure of the impregnation chamber, the inside of the battery cell 50 may be impregnated with electrolyte by repeatedly increasing and decreasing the internal pressure of each of the plurality of battery cells 50 through the plurality of hoppers 200, respectively, according to the present invention. As a result, the amount of high-purity gas (e.g., inert gas, nitrogen) used for pressurization is significantly reduced, such that the manufacturing cost of the secondary battery may be significantly reduced. In addition, since the electrolyte impregnation is performed while the plurality of battery cells 50 is exposed, it may be quickly and easily confirmed visually when the impregnation is not performed normally or a defect occurs in the electrolyte injection and impregnation device 10. In addition, since the time required for increasing and decreasing the pressure is reduced, the time required for the electrolyte impregnation process may be shortened. In addition, since the internal pressure of the plurality of battery cells 50 is definitely increased and decreased, impregnation may be effectively performed.

In addition, unlike the conventional method of injecting electrolyte into the plurality of battery cells 50 in the injection chamber after decreasing the internal pressure of the injection chamber to a vacuum, the electrolyte may be injected after individually decreasing the internal pressure of each of the plurality of battery cells 50 to a vacuum through the plurality of hoppers 200. As a result, the time required for decreasing pressure is reduced such that the time required for the electrolyte injection process may be shortened. In addition, since the internal pressure of the plurality of battery cells 50 is definitely reduced, the electrolyte injection may be effectively performed.

In addition, since the above-described conventional impregnation chamber and injection chamber are unnecessary, the equipment space may be saved and the device (electrolyte injection and impregnation device 10) may be miniaturized. In addition, since the device may be miniaturized, identification of the cause of the device failure is facilitated, thereby facilitating the maintenance thereof.

In addition, the hopper 200 capable of electrolyte injection and pressure increase/decrease may be easily embodied at low cost with a simple configuration.

In addition, the number and/or length of pipes for connecting the pressurize and depressurize unit 220 of the plurality of hoppers 200 to the depressurization source P1 and the pressurization source P2 may be reduced. As a result, the manufacturing and maintenance costs of the electrolyte injection and impregnation device 10 may be reduced.

In addition, since the reception space 400 and the plurality of manifolds 500 are provided, the uniformity of the internal pressure increase and decrease of the plurality of hoppers 200 and the plurality of battery cells 50 by the depressurization source P1 and the pressurization source P2 may be improved. As a result, the quality of the battery cells 50 may be improved.

According to the embodiments of the present invention, each of the plurality of hoppers 200 may be in direct contact with each of the plurality of battery cells 50.

Accordingly, compared to the conventional structure in FIGS. 1 to 3 where a separate hopper (e.g., hopper 62 of the conventional carrier 61) connecting the battery cell 50 and the hopper(injector 63) of the electrolyte injecting device is interposed therebetween, the connecting portion is reduced such that the portion (connecting portion) where the electrolyte leaks is reduced, and the amount of leaked electrolyte may be reduced. As a result, the number of times the electrolyte is cleaned may be reduced such that the production volume of the secondary battery may be increased, and problems such as weakening of the sealing force between the battery cell 50 and the hopper 200 caused by the electrolyte leakage may be reduced.

According to the embodiments of the present invention, the pressurize and depressurize unit 220 may be disposed between a front end portion of the injector 210 and each of the plurality of battery cells 50. The electrolyte discharged from the injector 210 may flow into each of the plurality of battery cells 50 through the pressurize and depressurize unit 220.

Accordingly, even when there is a pressure difference between interiors of the injector 210 and the battery cell 50 during the injection of the electrolyte, the speed of the electrolyte discharged from the injector 210 may decrease as the electrolyte passes through the pressurize and depressurize unit 220. As a result, the electrode assembly inside the battery cell 50 may not be damaged. In addition, since the electrolyte discharged from the injector 210 must pass through the pressurize and depressurize unit 220, the electrolyte may not diffuse to outside.

In addition, since the internal pressure of the plurality of battery cells 50 may be freely adjusted by the pressurize and depressurize unit 220 without affecting the injector 210 when the injector 210 is closed, the hopper 200 capable of injection and pressure control may be easily implemented with a simple configuration.

According to embodiments of the present invention, the injector 210 may include: an electrolyte storage 212 where the electrolyte introduced from outside is stored; and an injection needle 214 that opens and closes the injector 210 by opening and closing the electrolyte storage 212.

Accordingly, the hopper 200 capable of electrolyte injection and pressure increase/decrease may be easily embodied at low cost with a simple configuration.

According to the embodiments of the present invention, the electrolyte stored in the electrolyte storage 212 may flow into the interior of each of the plurality of battery cells 50 when the injection needle 214 opens the electrolyte storage 212. When the pressurize and depressurize unit 220 pressurizes the interior of each of the plurality of battery cells 50, the injection needle 214 may close the electrolyte storage 212.

Accordingly, the hopper 200 capable of electrolyte injection and pressure increase/decrease may be easily embodied at low cost with a simple configuration.

According to embodiments of the present invention, each of the plurality of manifolds 500 may include: a common pipe 510 connected to the reception space 400; and a plurality of branch pipes 520 each connecting the common pipe 510 and the pressurize and depressurize units 220 of the plurality of different hoppers 200.

Accordingly, the number and/or length of pipes for connecting the pressurize and depressurize unit 220 of the plurality of hoppers 200 to the depressurization source P1 and the pressurization source P2 may be reduced. As a result, the manufacturing and maintenance costs of the electrolyte injection and impregnation device 10 may be reduced.

In addition, since each of the plurality of manifolds 500 includes the common pipe 510 and the plurality of branch pipes 520, the uniformity of the internal pressure increase and decrease of the plurality of hoppers 200 and the plurality of battery cells 50 by the depressurization source P1 and the pressurization source P2 may be improved. As a result, the quality of the battery cells 50 may be improved.

According to the embodiments of the present invention, each of the branch pipes 520 may have one end portion connected to the common pipe 510 disposed above other end portion thereof connected to the pressurize and depressurize units 220 of each of the plurality of hoppers 200.

Accordingly, the electrolyte may be prevented from flowing into the common pipe 510 and the reception space 400. As a result, the electrolyte injection and impregnation device 10 may not be damaged and durability may be improved.

According to the embodiments of the present invention, a first angle L between a horizontal plane and a straight line connecting the one end portion and the other end portion of each of the branch pipes 520 may be 30 degrees or more and 60 degrees or less.

Accordingly, the electrolyte may be prevented from flowing into the common pipe 510 and the reception space 400.

According to the embodiments of the present invention, each of the plurality of hoppers 200 may be connected to an upper end portion of each of the plurality of battery cells 50 mounted on the mount 100. The mount 100 may include a plurality of cell support bodies 110 where the plurality of battery cells 50 are mounted, respectively, surrounding the plurality of battery cells 50 respectively. Each of the plurality of cell support bodies 110 may surround each of the plurality of battery cells 50, mounted on each of the plurality of cell support bodies 110, respectively, from a lower portion to an upper portion thereof.

Accordingly, when the interiors of the plurality of battery cells 50 are pressurized to a pressure greater than the atmospheric pressure, the plurality of battery cells 50 may be stably fixed and supported. As a result, damage to the battery cells 50 may be prevented and the impregnation process may be stably performed.

According to embodiments of the present invention, each of the plurality of cell support bodies 110 may include at least one first groove 112 recessed downward from an upper end of each of the plurality of cell support bodies 110 and penetrating through inside and outside of each of the plurality of cell support bodies 110.

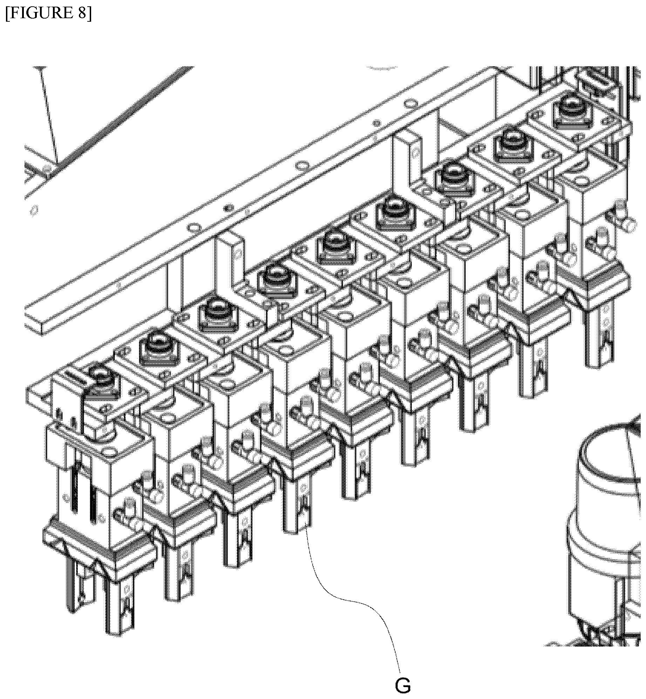

Accordingly, even when the cell support body 110 surrounds the upper portion of the battery cell 50, the battery cell 50 may be easily pulled out from the cell support body 110 through the first groove 112. For example, the gripper (G in FIG. 8) may stably hold the beading 53 of the battery cell 50 through the first groove 112 and pull the battery cell 50 out from the cell support body 110.

According to embodiments of the present invention, each of the plurality of hoppers 200 may be disposed above each of the plurality of battery cells 50 mounted on the mount 100 and may be vertically connected to each of the plurality of battery cells 50. The electrolyte injection and impregnation device may further include a base portion 600 disposed below the plurality of hoppers 200 and vertically movable relative to the plurality of hoppers 200. The base portion 600 may include: a plate-shaped base 610; and a plurality of alignment members 620 installed at the base 610 and formed to protrude upward than the base 610. Each of the plurality of alignment members 620 including: an alignment guide 622 having a cross-sectional area gradually increasing from an upper end toward downward direction; and an alignment fixer 624 extending downward from a lower end of the alignment guide 622 and having a constant cross-sectional area. The mount 100 may include a plurality of alignment holes 120 formed to penetrate vertically therethrough and through which the plurality of alignment members 620 are respectively inserted o pass. At least a portion of each of the plurality of alignment holes 120 may have a cross-sectional shape and size corresponding to those of each of the alignment fixers 624 and having an inner surface in contact with each of the alignment fixers 624.

Accordingly, the mount 100 may be easily aligned to and fixedly installed at the base portion 600. As a result, when the base portion 600 moves relatively upward, the plurality of battery cells 50 that are mounted on the mount 100 may come in contact with or face the plurality of hoppers 200 at an accurate position.

According to the embodiments of the present invention, the base portion 600 may further include a plurality of elastic members 630 coupled to the plurality of alignment members 630, respectively. Each of the plurality of elastic members 630 may be elastically deformed by the mount 100, and apply pressure to the mount 100 in upward direction.

Accordingly, the plurality of battery cells 50 may be in close contact with the plurality of hoppers 200 by the plurality of elastic members 630. Accordingly, electrolyte injecting and impregnation may be performed effectively and easily. In addition, shock may be absorbed by the elastic members 630.

According to embodiments of the present invention, the electrolyte injecting and impregnation method S700 may include: a mounting process S710 of mounting a plurality of battery cells 50 on a mount 100; a connecting process S720 of connecting the plurality of battery cells 50 to a plurality of hoppers 200, respectively; an injection process S740 of injecting an electrolyte into the plurality of battery cells 50 through the plurality of hoppers 200; and an impregnation process S750 of depressurizing and pressurizing interiors of the plurality of battery cells 50 through the plurality of hoppers 200.

Accordingly, the electrolyte may be injected and the plurality of battery cells 50 may be impregnated by connecting the plurality of hoppers 200 of the electrolyte injection and impregnation device 10 to the plurality of battery cells 50 only once, respectively. As a result, the manufacturing cost of the secondary battery may be reduced and the manufacturing time may be shortened.

In addition, the internal pressure of the plurality of battery cells 50 may be repeatedly increased and decreased through the plurality of hopper 200 individually to impregnate the inside of the battery cell 50 with the electrolyte. As a result, the amount of high-purity gas (e.g., inert gas, nitrogen) used for pressurization is significantly reduced, such that the manufacturing cost of the secondary battery may be significantly reduced. In addition, since the electrolyte impregnation is performed while the plurality of battery cells 50 is exposed, it may be quickly and easily confirmed visually when the impregnation is not performed normally or a defect occurs in the electrolyte injection and impregnation device 10. In addition, since the time required for increasing and decreasing the pressure is reduced, the time required for the electrolyte impregnation process may be shortened. In addition, since the internal pressure of the plurality of battery cells 50 is definitely increased and decreased, impregnation may be effectively performed.

According to embodiments of the present invention, the electrolyte injection and impregnation method may further include: a depressurizing process S730 of depressurizing the interiors of the plurality of battery cells 50 through the plurality of hoppers 200. The injection process S740 may be performed after the depressurizing process S730.

Accordingly, the electrolyte may be injected after the interior of individual battery cell 50 is depressurized to a vacuum through the individual hopper 200. As a result, the time required for decreasing pressure is reduced such that the time required for the electrolyte injection process may be shortened. In addition, since the internal pressure of the plurality of battery cells 50 is definitely reduced, the electrolyte injection may be effectively performed.

In addition to the advantageous effects described above, specific effects of the present invention will be described further while describing specific details of the present invention.

### [BRIEF DESCRIPTION OF DRAWINGS]

FIG. 1 is a front view of a conventional electrolyte injecting device.
FIG. 2 is an enlarged view illustrating an injector coupled to a hopper of an upper case of the conventional electrolyte injecting device of FIG. 1.
FIG. 3 is a front view of a conventional electrolyte impregnating device.
FIGS. 4 and 5 are front and plan views schematically illustrating an electrolyte injection and impregnation device, respectively, according to an embodiment of the present invention.
FIG. 6 is a perspective view illustrating a plurality of battery cells mounted on a mount of FIG. 4.
FIG. 7 is an enlarged view illustrating a cell support body of FIG. 6.
FIG. 8 is a perspective view illustrating a gripper for removing a battery cell installed on a cell support body.
FIG. 9 is a cross-sectional view illustrating the mount and a base portion of FIG. 4.
FIG. 10 is an enlarged view illustrating a portion of the electrolyte injection and impregnation device of FIGS. 4 and 5.
FIG. 11 is a cross-sectional view of the hopper of the electrolyte injection and impregnation device of FIG. 10.
FIG. 12 is a perspective view illustrating the reception space and the manifold of FIG. 10.
FIGS. 13 and 14 are perspective and bottom views illustrating the hopper and manifold of FIG. 10.
FIG. 15 is a perspective view illustrating a portion of the manifold of FIGS. 10 to 14.
FIG. 16 is a flow chart illustrating an electrolyte injecting and impregnation method according to an embodiment of the present invention.

**[DESCRIPTION OF REFERENCE NUMERALS]**

| | | | |
|---|---|---|---|
| 10: | electrolyte injection and impregnation device | | |
| 50: | battery cell | 52: | case |
| 53: | beading | 100: | mount |
| 110: | cell support body | 112: | first groove |
| 120: | alignment hole | 200: | hopper |
| 210: | injector | 212: | electrolyte storage |
| 214: | injection needle | 2142: | electrolyte inlet passage |
| 220: | pressurize and depressurize unit | 300: | electrolyte supply |
| 400: | reception space | 500: | manifold |
| 510: | common pipe | 520: | branch pipe |
| 600: | alignment member | 622: | alignment guide |
| 624: | alignment fixer | 626: | body |
| 630: | elastic member | P1: | depressurization source |
| P2: | pressurization source | T1: | depressurizing pipe |
| T2: | pressurizing pipe | T3: | vent pipe |

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein comprise expressions in plural form unless the context explicitly dictates otherwise. Terms such as "consists of" or "comprises" used herein should not be construed as necessarily comprising all of the elements or steps described in the specification, and should be construed as not comprising some of the elements or steps, or comprising additional elements or steps.

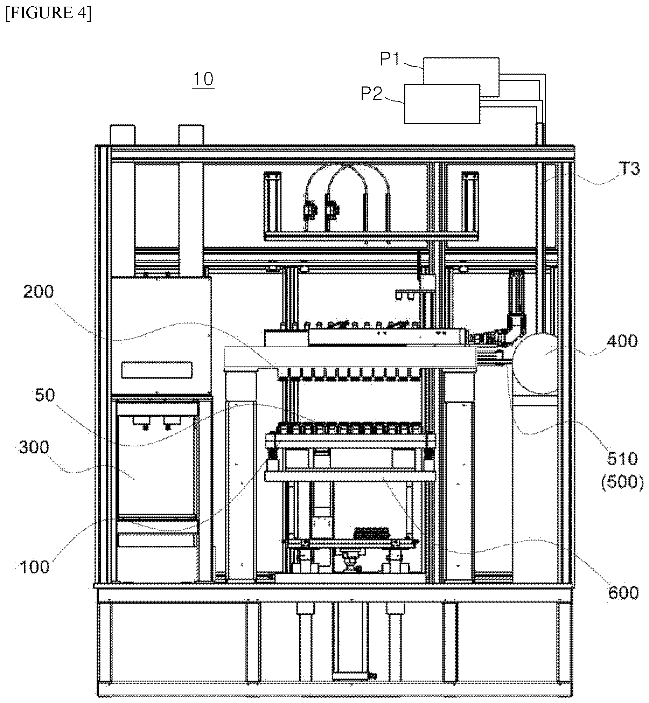

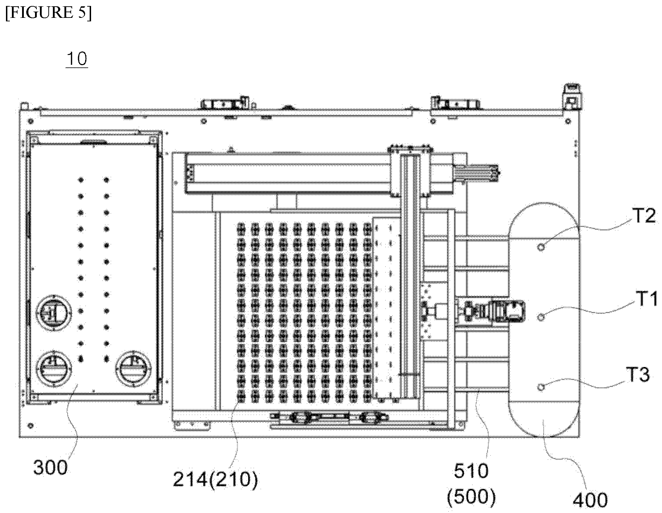

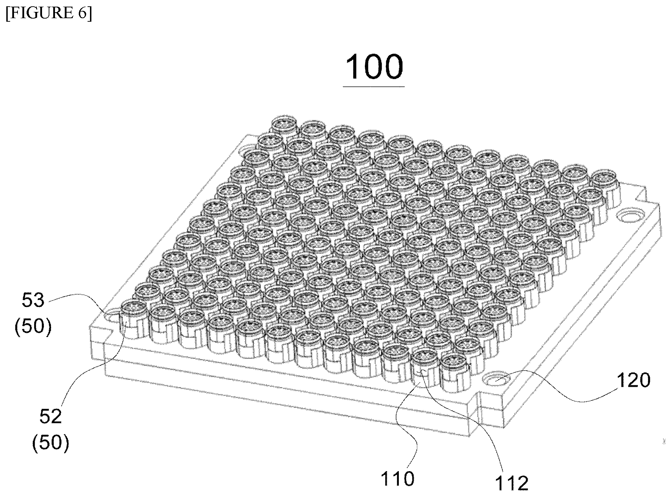

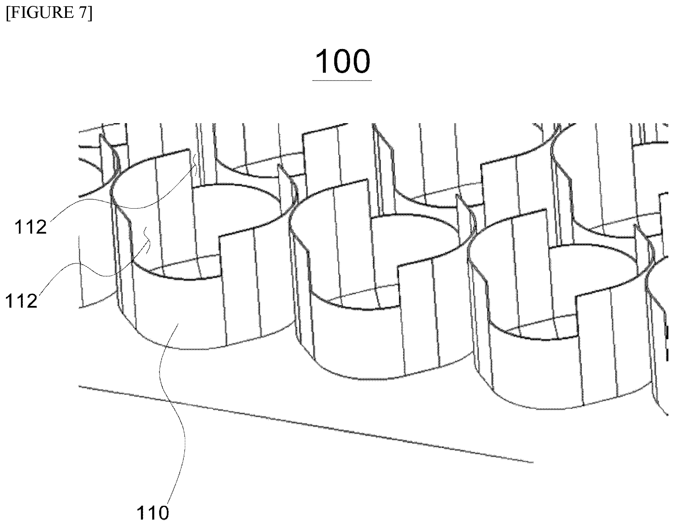

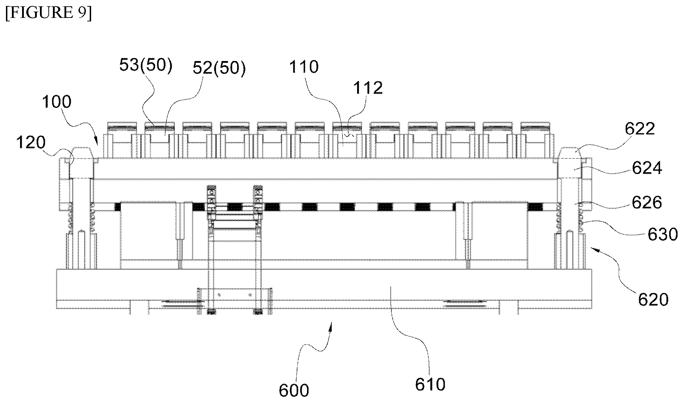

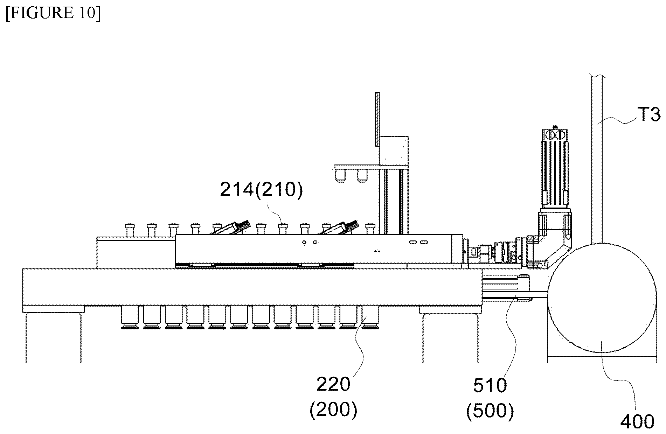

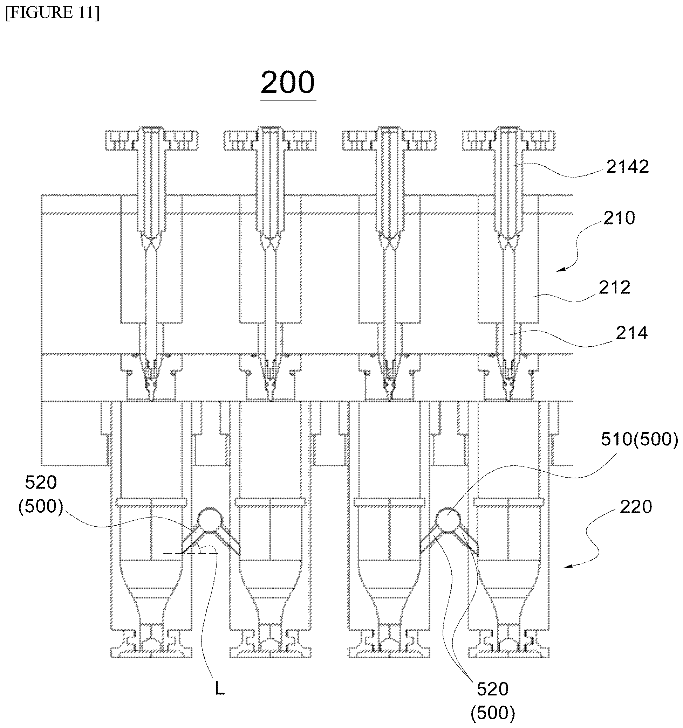

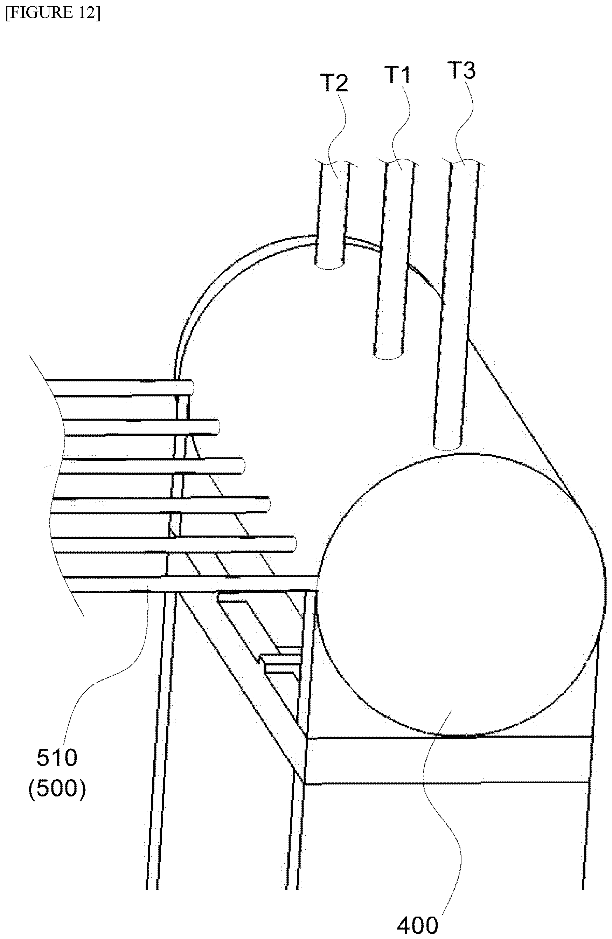

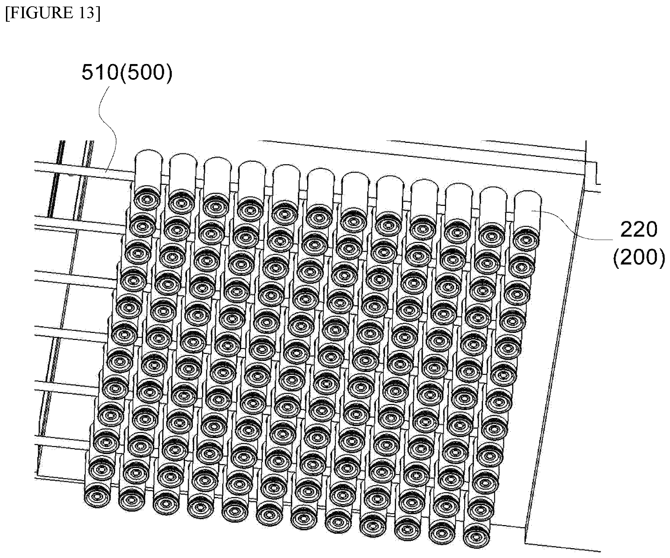

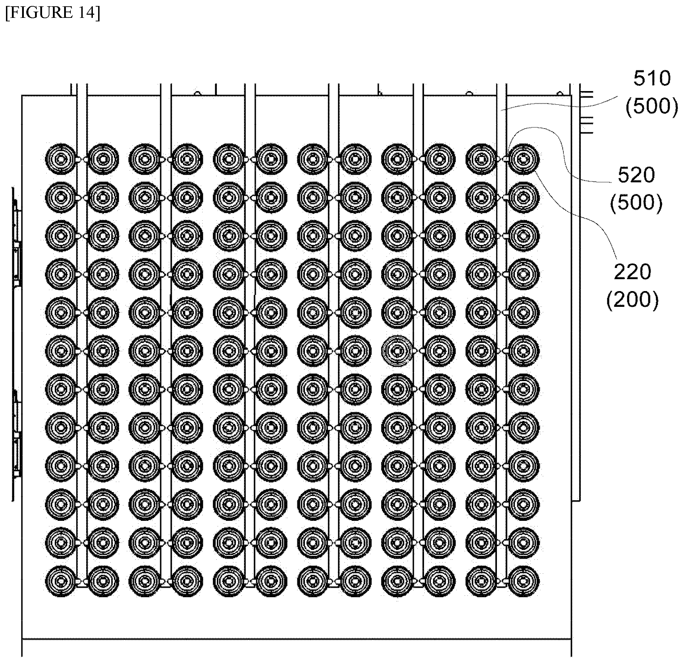

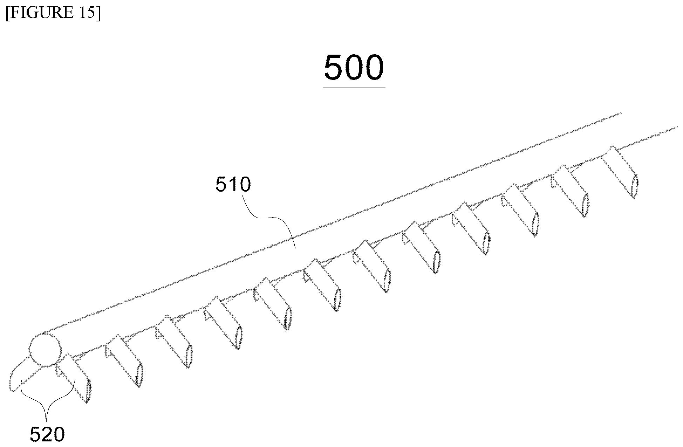

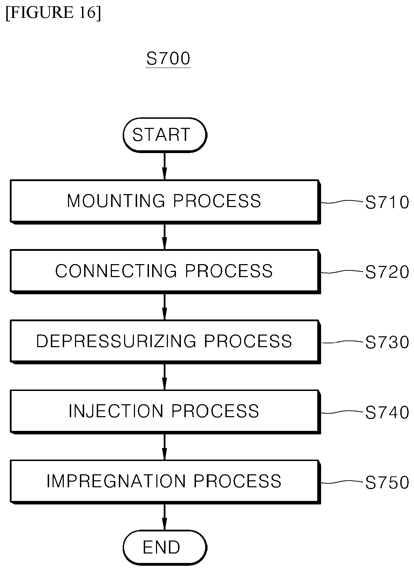

FIG. 1 is a front view of a conventional electrolyte injecting device. FIG. 2 is an enlarged view illustrating an injector coupled to a hopper of an upper case of the conventional electrolyte injecting device of FIG. 1. FIG. 3 is a front view of a conventional electrolyte impregnating device. FIGS. 4 and 5 are front and plan views schematically illustrating an electrolyte injection and impregnation device, respectively, according to an embodiment of the present invention. FIG. 6 is a perspective view illustrating a plurality of battery cells mounted on a mount of FIG. 4. FIG. 7 is an enlarged view illustrating a cell support body of FIG. 6. FIG. 8 is a perspective view illustrating a gripper for removing a battery cell installed on a cell support body. FIG. 9 is a cross-sectional view illustrating the mount and a base portion of FIG. 4. FIG. 10 is an enlarged view illustrating a portion of the electrolyte injection and impregnation device of FIGS. 4 and 5. FIG. 11 is a cross-sectional view of the hopper of the electrolyte injection and impregnation device of FIG. 10. FIG. 12 is a perspective view illustrating the reception space and the manifold of FIG. 10. FIGS. 13 and 14 are perspective and bottom views illustrating the hopper and manifold of FIG. 10. FIG. 15 is a perspective view illustrating a portion of the manifold of FIGS. 10 to 14. FIG. 16 is a flow chart illustrating an electrolyte injecting and impregnation method according to an embodiment of the present invention.

### [ELECTROLYTE INJECTION AND IMPREGNATION DEVICE]

Referring to FIGS. 4 and 5, an electrolyte injection and impregnation device 10 according to an embodiment may include: a mount 100; a plurality of hoppers 200; a depressurization source P1; and a pressurization source P2. The electrolyte injection and impregnation device 10 may further include a reception space 400; and a plurality of manifolds 500. The electrolyte injection and impregnation device 10 may further include a vent. The electrolyte injection and impregnation device 10 may further include a base portion 600.

An electrolyte supply 300 may be connected to the plurality of hoppers 200.

The depressurization source P1 and the pressurization source P2 may be connected to the plurality of hoppers 200, the reception space 400, and/or the plurality of manifolds 500. The pressurization source P2 may be a gas (e.g., nitrogen) supply. The depressurization source P1 may be a vacuum pump.

The vent may be connected to the plurality of hoppers 200, the reception space 400, and/or the plurality of manifolds 500.

Hereinafter, the mount 100, the hopper 200, the reception space 400, the plurality of manifolds 500 and the base portion 600 will be described.

### [MOUNT AND BASE PORTION]

Referring further to FIG. 6 and FIG. 7, the plurality of battery cells 50 may be mounted on the mount 100. The mount 100 may include a plurality of cell support bodies 110. The mount 100 may include a plurality of alignment holes 120.

The battery cell 50 may include a case 52 and an electrode assembly accommodated in the case 52 (FIG. 6). The case 52 may have an open upper end. The case 52 may include a beading 53 bent inward (FIG. 6). An electrolyte may be injected into the case 52 by an electrolyte injection and impregnation device 10, and the electrode assembly may be impregnated with the electrolyte injected into the case 52.

The plurality of battery cells 50 may be mounted on the plurality of cell support bodies 110, respectively, and the plurality of cell support bodies 110 may surround the plurality of battery cells 50, respectively. When each of the plurality of hoppers 200 described below is connected to the upper end portion of each of the plurality of battery cells 50 mounted on the mount 100, each cell support body 110 may surround each battery cell 50 mounted on each cell support body 110 from a lower portion to an upper portion thereof.

Accordingly, when the interiors of the plurality of battery cells 50 are pressurized to a pressure greater than the atmospheric pressure, the plurality of battery cells 50 may be stably fixed and supported. As a result, damage to the battery cells 50 may be prevented and the impregnation process may be stably performed.

Each of the cell support bodies 110 may include at least one first groove 112.

The at least one first groove 112 may be recessed downward from an upper end of each of the plurality of cell support bodies 110, and penetrate through inside and outside of each of the plurality of cell support bodies 110.

Accordingly, even when the cell support body 110 surrounds the upper portion of the battery cell 50, the battery cell 50 may be easily pulled out from the cell support body 110 through the first groove 112. For example, the gripper (G in FIG. 8) may stably hold the beading 53 of the battery cell 50 through the first groove 112 and pull the battery cell 50 out from the cell support body 110.

The plurality of alignment holes 120 may be formed to penetrate vertically therethrough (FIG. 6). A plurality of alignment members 620 described later may be inserted through or pass through the plurality of alignment holes 120, respectively.

Referring further to FIG. 9, the base portion 600 may be disposed below the plurality of hoppers 200. The base portion 600 may be vertically movable relative to the plurality of hoppers 200. Here, each of the plurality of hoppers 200 may be disposed above and connected vertically to each of the plurality of battery cells 50 mounted on the mount 100.

The base portion 600 may include: a plate-shaped base 610; and a plurality of alignment members 620. The base portion 600 may further include a plurality of elastic members 630.

The plurality of alignment members 620 may be installed at the base 610. The plurality of alignment members 620 may be formed to protrude upward than the base 610.

Each of the plurality of alignment members 620 may include: an alignment guide 622; and an alignment fixer 624. Each alignment member 620 may include a body 626.

The alignment guide 622 may have a cross-sectional area gradually increasing from and upper end toward downward direction.

The alignment fixer 624 may extend downward from a lower end of the alignment guide 622. The alignment fixer 624 may have a constant cross-sectional area vertically.

As described above, the plurality of alignment members 620 may be inserted through or pass through the plurality of alignment holes 120, respectively. At least a portion of each of the plurality of alignment holes 120 may have a cross-sectional shape and size corresponding to those of each of the alignment fixers 624. At least a portion of each of the plurality of alignment holes 120 may have an inner surface in contact with each of the alignment fixers 624.

Accordingly, the mount 100 may be easily aligned to and fixedly installed at the base portion 600. As a result, when the base portion 600 moves relatively upward, the plurality of battery cells 50 that are mounted on the mount 100 may come in contact with or face the plurality of hoppers 200 at an accurate position.

Specifically, the mount 100 may be aligned and coupled to the base portion 600 while the alignment guide 622 is inserted through or pass through the alignment hole 120. In addition, the mount 100 may be aligned and fixed to the base portion 600 with the alignment fixer 624 in contact with the inner surface of the alignment hole 120.

The body 626 may be positioned under the alignment fixer 624. The body 626 may extend vertically. The body 626 may be coupled to the base 610. At least the cross-sectional area of the lower portion of the body 626 may be larger than that of the alignment fixer 624. The body 626 may support the mount 100.

The plurality of elastic members 630 may be coupled to the plurality of alignment members 620, respectively.

Each of the plurality of elastic members 630 may be installed at the body 626 of each of the plurality of alignment members 620. Each of the plurality of elastic members 630 may surround the body 626 of each of the plurality of alignment members 620. Each of the plurality of elastic members 630 may be elastically deformed by the mount 100. Each of the plurality of elastic members 630 may apply pressure to the mount 100 in upward direction.

Accordingly, the plurality of battery cells 50 may be in close contact with the plurality of hoppers 200 by the plurality of elastic members 630. Accordingly, electrolyte injecting and impregnation may be performed effectively and easily. In addition, shock may be absorbed by the elastic members 630.

### [HOPPERS]

The plurality of hoppers 200 may be connected to the plurality of battery cells 50 mounted on the mount 100, respectively. The plurality of hoppers 200 may be connected to an electrolyte supply 300. The plurality of hoppers 200 may be connected to the depressurization source P1 and the pressurization source P2. The plurality of hoppers 200 may be connected to a vent.

An electrolyte may be injected into the plurality of battery cells 50 through the plurality of hoppers 200. In addition, the interiors of the plurality of battery cells 50 may be depressurized to a pressure lower than atmospheric pressure and pressurized to a pressure higher than atmospheric pressure through the plurality of hoppers 200. The interiors of the plurality of battery cells 50 may also be ventilated to atmospheric pressure through the plurality of hoppers 200.

Accordingly, the electrolyte may be injected and the plurality of battery cells 50 may be impregnated by connecting the plurality of hoppers 200 of the electrolyte injection and impregnation device 10 to the plurality of battery cells 50 only once, respectively. As a result, the manufacturing cost of the secondary battery may be reduced and the manufacturing time may be shortened. In addition, since the conventional electrolyte injecting device and impregnating device are integrated into a single device, the maintenance cost of the secondary battery manufacturing device may be reduced.

In addition, unlike the conventional method wherein the inside of the plurality of battery cells 50 in the impregnation chamber is impregnated with electrolyte by repeatedly increasing and decreasing the internal pressure of the impregnation chamber, the inside of the battery cell 50 may be impregnated with electrolyte by repeatedly increasing and decreasing the internal pressure of each of the plurality of battery cells 50 through the plurality of hoppers 200, respectively, according to the present invention. As a result, the amount of high-purity gas (e.g., inert gas, nitrogen) used for pressurization is significantly reduced, such that the manufacturing cost of the secondary battery may be significantly reduced. In addition, since the electrolyte impregnation is performed while the plurality of battery cells 50 is exposed, it may be quickly and easily confirmed visually when the impregnation is not performed normally or a defect occurs in the electrolyte injection and impregnation device 10. In addition, since the time required for increasing and decreasing the pressure is reduced, the time required for the electrolyte impregnation process may be shortened. In addition, since the internal pressure of the plurality of battery cells 50 is definitely increased and decreased, impregnation may be effectively performed.

In addition, unlike the conventional method of injecting electrolyte into the plurality of battery cells 50 in the injection chamber after decreasing the internal pressure of the injection chamber to a vacuum, the electrolyte may be injected after individually decreasing the internal pressure of each of the plurality of battery cells 50 to a vacuum through the plurality of hoppers 200. As a result, the time required for decreasing pressure is reduced such that the time required for the electrolyte injection process may be shortened. In addition, since the internal pressure of the plurality of battery cells 50 is definitely reduced, the electrolyte injection may be effectively performed.

In addition, since the above-described conventional impregnation chamber and injection chamber are unnecessary, the equipment space may be saved and the device (electrolyte injection and impregnation device 10) may be miniaturized. In addition, since the device may be miniaturized, identification of the cause of the device failure is facilitated, thereby facilitating the maintenance thereof.

Specifically, it may be confirmed that the amount of high-purity gas (nitrogen) used is significantly reduced as shown in the table below.

| | N₂ Consumption (L/time) | Concentration (PPM) | Total daily usage (L) |
|---|---|---|---|
| Conventional device | 7200 | 130 | Approximately 8,316,000 |
| electrolyte injection and impregnation device of the present invention | 194 | 130 | Approximately 224,000 |
| Saved amount | 7006 | | Approximately 8,092,000 |

The plurality of hoppers 200 may be made of a material including iron. The plurality of hoppers 200 may be made of a material including stainless steel.

Each of the plurality of hoppers 200 may be in direct contact with each of the plurality of battery cells 50. For example, the front end portion of each of the plurality of hoppers 200 may be inserted into the case 52 of each of the plurality of battery cells 50, respectively, and may be in close contact with the upper surface of the beading 53 protruding inward inside of the case 52.

Accordingly, compared to the conventional structure in FIGS. 1 to 3 where a separate hopper (e.g., hopper 62 of the conventional carrier 61) connecting the battery cell 50 and the hopper (injector 63) of the electrolyte injecting device is interposed therebetween, the connecting portion is reduced such that the portion (connecting portion) where the electrolyte leaks is reduced, and the amount of leaked electrolyte may be reduced. As a result, the number of times the electrolyte is cleaned may be reduced such that the production volume of the secondary battery may be increased, and problems such as weakening of the sealing force between the battery cell 50 and the hopper 200 caused by the electrolyte leakage may be reduced. For example, when the leaked electrolyte adheres to the pusher (not shown) of the mount 100 that presses the battery cell 50 upward from therebelow, the pusher may stick to a surrounding object due to the viscosity of the electrolyte and may not rise. Accordingly, the sealing force between the battery cell 50 and the hopper 200 may be weakened.

To elaborate, conventionally, a hopper 62 of a carrier 61 that connects the battery cell 50 and the hopper (injector 63) of the electrolyte injecting device is interposed therebetween. Accordingly, conventionally, there was a large amount of electrolyte leakage due to the lack of sealing between the hopper 62 of the carrier 61 and the hopper (injector 63) of the electrolyte injecting device (FIGS. 1 to 3). Here, the carrier 61 may be a case or a pallet used to facilitate transport and fixing of the plurality of battery cells 50. Meanwhile, the mount 100 of the present invention may correspond to the lower carrier 61a among the conventional upper and lower carriers 61a and 61b.

Referring further to FIGS. 10 and 11, each of the plurality of hoppers 200 may include: an injector 210; and a pressurize and depressurize unit 220.

The injector 210 may be connected to the electrolyte supply 300. The injector 210 may be connected to the plurality of battery cells 50. The injector 210 may be configured to introduce the electrolyte introduced from outside into each of the plurality of battery cells 50. The injector 210 may be openable and closeable.

The injector 210 may include: an electrolyte storage 212; and an injection needle 214.

The electrolyte introduced from outside may be stored in the electrolyte storage 212. For example, the injection needle 214 described below may be provided with an electrolyte inlet passage 2142. The electrolyte may be introduced from the outside into the electrolyte storage 212 through the electrolyte inlet passage 2142.

The injection needle 214 may open and close the injector 210 by opening and closing the electrolyte storage 212. When the injection needle 214 opens the electrolyte storage 212, the electrolyte stored in the electrolyte storage 212 may be introduced into the interior of each of the plurality of battery cells 50.

For example, the front end of the injection needle 214 may open and close the rear end of the pressurize and depressurize unit 220. When the injection needle 214 opens the rear end of the pressurize and depressurize unit 220, the electrolyte stored in the electrolyte storage 212 may flow into the interior of each of the plurality of battery cells 50 through the pressurize and depressurize unit 220.

The injection needle 214 closes the electrolyte storage 212 when the pressurize and depressurize unit 220 described later pressurizes the interior of the plurality of battery cells 50.

Accordingly, the hopper 200 capable of electrolyte injection and pressure increase/decrease may be easily embodied at low cost with a simple configuration.

The pressurize and depressurize unit 220 may be connected to the plurality of battery cells 50. The pressurize and depressurize unit 220 may be connected to the injector 210. The pressurize and depressurize unit 220 may be connected to the depressurization source P1 and the pressurization source P2. The pressurize and depressurize unit 220 may be configured to pressurize or depressurize the interior of each of the plurality of battery cells 50.

Accordingly, the hopper 200 capable of electrolyte injection and pressure increase/decrease may be easily embodied at low cost with a simple configuration.

The pressurize and depressurize unit 220 may be disposed between a front end portion of the injector 210 and each of the plurality of battery cells 50. The electrolyte discharged from the injector 210 may flow into each of the plurality of battery cells 50 through the pressurize and depressurize unit 220.

Accordingly, even when there is a pressure difference between interiors of the injector 210 and the battery cell 50 during the injection of the electrolyte, the speed of the electrolyte discharged from the injector 210 may decrease as the electrolyte passes through the pressurize and depressurize unit 220. As a result, the electrode assembly inside the battery cell 50 may not be damaged. In addition, since the electrolyte discharged from the injector 210 must pass through the pressurize and depressurize unit 220, the electrolyte may not diffuse to outside.

In addition, since the internal pressure of the plurality of battery cells 50 may be freely adjusted by the pressurize and depressurize unit 220 without affecting the injector 210 when the injector 210 is closed, the hopper 200 capable of injection and pressure control may be easily implemented with a simple configuration.

### [RECEPTION SPACE AND MANIFOLDS]

Referring further to FIG. 12, the reception space 400 may be connected to the depressurization source P1 and the pressurization source P2. For example, the reception space 400 may be connected to a depressurizing pipe T1 connected to a depressurization source P1 and a pressurizing pipe T2 connected to a pressurization source P2. Accordingly, interiors of the plurality of manifolds 500 and the plurality of pressurize and depressurize units 220 connected to the reception space 400 may be depressurized or pressurized. The reception space 400 may be a predetermined empty space.

The reception space 400 may be connected to the vent. For example, the reception space 400 may be connected to a vent pipe T3 connected to the vent. Accordingly, interiors of the plurality of manifolds 500 and the plurality of pressurize and depressurize units 220 connected to the reception space 400 may be ventilated to atmospheric pressure.

By opening and closing the valves installed at the depressurizing pipe T1, the pressurizing pipe T2, and the vent pipe T3, the interior of the reception space 400, the manifold 500, the hopper 200 and the battery cell 50 may be depressurized, pressurized, and ventilated to atmospheric pressure.

Referring further to FIGS. 13 to 15, each of the plurality of manifolds 500 may connect the reception space 400 and the pressurize and depressurize units 220 of a plurality of different hoppers 200.

Accordingly, the number and/or length of pipes for connecting the pressurize and depressurize unit 220 of the plurality of hoppers 200 to the depressurization source P1 and the pressurization source P2 may be reduced. As a result, the manufacturing and maintenance costs of the electrolyte injection and impregnation device 10 may be reduced.

In addition, since the reception space 400 and the plurality of manifolds 500 are provided, the uniformity of the internal pressure increase and decrease of the plurality of hoppers 200 and the plurality of battery cells 50 by the depressurization source P1 and the pressurization source P2 may be improved. As a result, the quality of the battery cells 50 may be improved.

Each of the plurality of manifolds 500 may include: a common pipe 510; and a plurality of branch pipes 520.

The common pipe 510 may be connected to the reception space 400.

The plurality of branch pipes 520 may connect the common pipe 510 and the pressurize and depressurize units 220 of the plurality of different hoppers 200.

Accordingly, the number and/or length of pipes for connecting the pressurize and depressurize unit 220 of the plurality of hoppers 200 to the depressurization source P1 and the pressurization source P2 may be reduced. As a result, the manufacturing and maintenance costs of the electrolyte injection and impregnation device 10 may be reduced.

In addition, since each of the plurality of manifolds 500 includes the common pipe 510 and the plurality of branch pipes 520, the uniformity of the internal pressure increase and decrease of the plurality of hoppers 200 and the plurality of battery cells 50 by the depressurization source P1 and the pressurization source P2 may be improved. As a result, the quality of the battery cells 50 may be improved.

Each of the branch pipes 520 may have one end portion connected to the common pipe 510 disposed above other end portion thereof connected to the pressurize and depressurize unit 220 of each of the plurality of hoppers 200.

Accordingly, the electrolyte may be prevented from flowing into the common pipe 510 and the reception space 400. As a result, the electrolyte injection and impregnation device 10 may not be damaged and durability may be improved.

A first angle L between a horizontal plane and a straight line connecting the one end portion and the other end portion of each of the branch pipes 520 may be 30 degrees or more and 60 degrees or less. For example, the first angle L may be 45 degrees (FIG. 11).

Accordingly, the electrolyte may be prevented from flowing into the common pipe 510 and the reception space 400.

### [ELECTROLYTE INJECTING AND IMPREGNATION METHOD]

Referring to FIG. 16, an electrolyte injecting and impregnation method S700 according to an embodiment may include a mounting process S710; a connecting process S720; an injection process S740; and an impregnation process S750. The electrolyte injecting and impregnation method S700 may further include a depressurizing process S730.

In the mounting process S710, the plurality of battery cells 50 may be mounted on the mount 100.

In the connecting process S720, the plurality of battery cells 50 may be connected to the plurality of hoppers 200, respectively.

In the depressurizing process S730, the interiors of the plurality of battery cells 50 may be depressurized through the plurality of hoppers 200. The depressurizing process S730 may be omitted.

The injection process S740 may be performed after the depressurizing process S730.

Accordingly, the electrolyte may be injected after the interior of individual battery cell 50 is depressurized to a vacuum through the plurality of hopper 200. Accordingly, the time required for decreasing pressure is reduced such that the time required for the injection process S740 may be shortened. In addition, since the internal pressure of the plurality of battery cells 50 is definitely reduced, electrolyte injection may be performed effectively.

In the injection process S740, an electrolyte may be injected into the plurality of battery cells 50 through the plurality of hoppers 200.

In the impregnation process S750, interiors of the plurality of battery cells 50 may be depressurized and pressurized through the plurality of hoppers 200.

Accordingly, the electrolyte may be injected and the plurality of battery cells 50 may be impregnated by connecting the plurality of hoppers 200 of the electrolyte injection and impregnation device 10 to the plurality of battery cells 50 only once, respectively. As a result, the manufacturing cost of the secondary battery may be reduced and the manufacturing time may be shortened.

In addition, the internal pressure of the plurality of battery cells 50 may be repeatedly increased and decreased through the plurality of hopper 200 individually to impregnate the inside of the battery cell 50 with the electrolyte. As a result, the amount of high-purity gas (e.g., inert gas, nitrogen) used for pressurization is significantly reduced, such that the manufacturing cost of the secondary battery may be significantly reduced. In addition, since the electrolyte impregnation is performed while the plurality of battery cells 50 is exposed, it may be quickly and easily confirmed visually when the impregnation is not performed normally or a defect occurs in the electrolyte injection and impregnation device 10. In addition, since the time required for increasing and decreasing the pressure is reduced, the time required for the electrolyte impregnation process may be shortened. In addition, since the internal pressure of the plurality of battery cells 50 is definitely increased and decreased, impregnation may be effectively performed.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being comprised in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An electrolyte injection and impregnation device. comprising:
a mount 100 where a plurality of battery cells 50 are mounted;
a plurality of hoppers 200 connected to the plurality of battery cells 50 mounted on the mount 100, respectively;
an electrolyte supply 300 connected to the plurality of hoppers 200;
a depressurization source P1 and a pressurization source P2 connected to the plurality of hoppers 200;
a reception space 400 connected to the depressurization source P1 and the pressurization source P2; and
a plurality of manifolds 500,
wherein through the plurality of hoppers 200, an electrolyte is injected into the plurality of battery cells 50, and interiors of the plurality of battery cells 50 are depressurized to a pressure lower than atmospheric pressure and pressurized to a pressure higher than atmospheric pressure,
wherein each of the plurality of hoppers 200 comprises: an openable and closable injector 210 configured to introduce the electrolyte introduced from outside into each of the plurality of battery cells 50; and a pressurize and depressurize unit 220 connected to the depressurization source P1 and the pressurization source P2 and configured to pressurize or depressurize the interior of each of the plurality of battery cells 50, and
each of the plurality of manifolds 500 connects the reception space 400 to the pressurize and depressurize units 220 of a plurality of different hoppers 200.

2. The electrolyte injection and impregnation device of claim 1, wherein each of the plurality of hoppers 200 are in direct contact with each of the plurality of battery cells 50.

3. The electrolyte injection and impregnation device of one of claims 1 and 2, wherein the pressurize and depressurize unit 220 is disposed between a front end portion of the injector 210 and each of the plurality of battery cells 50, and
the electrolyte discharged from the injector 210 flows into each of the plurality of battery cells 50 through the pressurize and depressurize unit 220.

4. The electrolyte injection and impregnation device of any one of claims 1 to 3, wherein the injector 210 comprises: an electrolyte storage 212 where the electrolyte introduced from outside is stored; and an injection needle 214 that opens and closes the injector 210 by opening and closing the electrolyte storage 212.

5. The electrolyte injection and impregnation device of claim 4, wherein the electrolyte stored in the electrolyte storage 212 flows into the interior of each of the plurality of battery cells 50 when the injection needle 214 opens the electrolyte storage 212, and
the injection needle 214 closes the electrolyte storage 212 when the pressurize and depressurize unit 220 pressurizes the interior of each of the plurality of battery cells 50.

6. The electrolyte injection and impregnation device of any one of claims 1 to 5, wherein each of the plurality of manifolds 500 comprises: a common pipe 510 connected to the reception space 400; and a plurality of branch pipes 520 each connecting the common pipe 510 and the pressurize and depressurize units 220 of the plurality of different hoppers 200.

7. The electrolyte injection and impregnation device of claim 6, wherein each of the branch pipes 520 has one end portion connected to the common pipe 510 disposed above other end portion thereof connected to the pressurize and depressurize unit 220 of each of the plurality of hoppers 200.

8. The electrolyte injection and impregnation device of claim 7, wherein a first angle L between a horizontal plane and a straight line connecting the one end portion and the other end portion of each of the branch pipes 520 is 30 degrees or more and 60 degrees or less.

9. The electrolyte injection and impregnation device of any one of claims 1 to 8, wherein each of the plurality of hoppers 200 is connected to an upper end portion of each of the plurality of battery cells 50 mounted on the mount 100,
the mount 100 comprises a plurality of cell support bodies 110 where the plurality of battery cells 50 are mounted, respectively, the plurality of cell support bodies 110 surrounding the plurality of battery cells 50, respectively, and
each of the plurality of cell support bodies 110 surrounds each of the plurality of battery cells 50 mounted on each of the plurality of cell support bodies 110 from a lower portion to an upper portion thereof.

10. The electrolyte injection and impregnation device of claim 9, wherein each of the plurality of cell support bodies 110 comprises at least one first groove 112 recessed downward from an upper end of each of the plurality of cell support bodies 110 and penetrating through inside and outside of each of the plurality of cell support bodies 110.

11. The electrolyte injection and impregnation device of any one of claims 1 to 10, wherein each of the plurality of hoppers 200 is disposed above each of the plurality of battery cells 50 mounted on the mount 100 and is vertically connected to each of the plurality of battery cells 50,
further comprising a base portion 600 disposed below the plurality of hoppers 200 and vertically movable relative to the plurality of hoppers 200, the base portion 600 comprising: a plate-shaped base 610; and a plurality of alignment members 620 installed at the base 610 and formed to protrude upward than the base 610, each of the plurality of alignment members 620 comprising: an alignment guide 622 having a cross-sectional area gradually increasing from an upper end toward downward direction; and an alignment fixer 624 extending downward from a lower end of the alignment guide 622 and having a constant cross-sectional area vertically, and
wherein the mount 100 comprises a plurality of alignment holes 120 formed to penetrate vertically therethrough and through which the plurality of alignment members 620 are respectively inserted or pass, at least a portion of each of the plurality of alignment holes 120 having a cross-sectional shape and size corresponding to those of each of the alignment fixers 624 and having an inner surface in contact with each of the alignment fixers 624.

12. The electrolyte injection and impregnation device of claim 11, wherein the base portion 600 further comprises a plurality of elastic members 630 coupled to the plurality of alignment members 620, respectively, each of the plurality of elastic members 630 being elastically deformable by the mount 100 and applying pressure to the mount 100 in upward direction.

13. An electrolyte injection and impregnation method S700 using an electrolyte injection and impregnation device 10 of any one of claims 1 to 12, the electrolyte injection and impregnation method S700 comprising:
a mounting process S710 of mounting a plurality of battery cells 50 on a mount 100;
a connecting process S720 of connecting the plurality of battery cells 50 to a plurality of hoppers 200, respectively;
an injection process S740 of injecting an electrolyte into the plurality of battery cells 50 through the plurality of hoppers 200; and
an impregnation process S750 of depressurizing and pressurizing interiors of the plurality of battery cells 50 through the plurality of hoppers 200.

14. The electrolyte injection and impregnation method of claim 13, further comprising: a depressurizing process S730 of depressurizing the interiors of the plurality of battery cells 50 through the plurality of hoppers 200,
wherein the injection process S740 is performed after the depressurizing process S730.
